# EUROPEAN PATENT APPLICATION

(11) **EP 1 693 389 A1**
(43) Date of publication of application: **23.08.2006**
(21) Application number: 04793125.8
(22) Date of filing: 28.10.2004
(51) Int. Cl.: C08F 20/18, C08F 20/22, C08L 33/16, G02B 1/04

(54) **OPTICAL COMPONENT**

(30) Priority: 05.11.2003 JP 2003375612
(71) Applicant: OMRON CORPORATION, Kyoto-shi, Kyoto 600-8530 (JP)
(72) Inventor: KITAMURA, Kyoji, 801, Minamifudodo-cho,, Shimogyo-ku, Kyoto-shi, Kyoto 600-8530 (JP); ITO, Mitsuo, 801, Minamifudodo-cho, Kyoto-shi, Kyoto 600-8530 (JP)
(74) Representative: Kilian, Helmut
(86) International application number: PCT/JP2004/016017
(87) International publication number: WO 2005/044876

(57) **Abstract**

An optical component composed of a cured product of a crosslinkable resin containing a perfluorocyclohexane ring; a crosslinkable resin composition including a monomer containing a perflouorocyclohexane ring; the above optical component, which is obtained by curing, through a radical polymerization method, a crosslinkable resin composition including a polymer and/or copolymer containing a perfluorocyclohexane ring and a fluorine-containing monomer, or a crosslinkable resein composition including a fluorine-containing polymer and/or copolymer not containing a perfluorocyclohexane ring and a monomer containing a perfluorocyclohexane ring.

## Description

### Technical Field

The present invention relates to an optical component composed of a cured resin product prepared from a curable resin composition by radical polymerization, in particular, to an optical component composed of a cured resin product containing a perfluorocyclohexane ring as an essential component.

### Background Art

Plastic optical components include consumer lenses such as vision-correcting lenses and contact-lenses; lenses for optical devices including focusing lenses such as finder, camera, copying machine, overhead projector and projector for television or large screen and polarization lenses for use in printer and optical pickup; micro optical components for use in optical fiber communication devices (lens, prism, etc.); optical fiber parts and optical waveguide-like parts (optical branching/coupling waveguide, beam splitter/coupler waveguide, photocoupling waveguide, optical switch, photoisolator, photo-attenuation/amplification parts, photointerconnection, light guide circuit, etc.); and the like. There are many requirements for these lenses and optical components in various optical and mechanical properties, heat resistance, moisture resistance, light stability and durability, and others, according to applications.

Plastic materials for use in plastic optical components are grossly grouped into straight-chain polymers and crosslinkable polymers; and various molding and processing methods are used according to the plastic material used in molding and processing the plastic optical components. Generally, straight-chain polymers have a narrow selection width in refractive index and Abbe number, and are more birefringent, insufficient in heat resistance, and difficult in microfabrication. On the other hand, although there is not such a problem in optical properties and heat resistance as straight-chain polymers, crosslinkable polymers are insufficient in transparency, have large curing shrinkage in crosslinking reaction, and require many steps in microfabrication, although possible, making mass production difficult.

For plastic optical components for use in optical fiber communication devices, there are requirements in optical properties such as low-light transmission loss (hereinafter, referred to as light loss), controllability of refractive index in narrower width and solder heat resistance at high temperature, in addition to the requirements in optical and mechanical properties, moisture resistance, and others for lenses. Specifically, for example, for optical waveguides, there are requirements that the light loss in wavelength bands of 1.31 µm and 1.55 µm should be 0.5 dB/cm or less, that the difference in refractive index between core region and clad region should be 0.5% or less, and that the solder heat resistance should be 250°C or higher. Crosslinkable polymers satisfying such requirements in properties as above mentioned have been studied in the art, but there is still no such crosslinkable polymer sufficiently satisfying the requirements in properties currently.

In addition, there is a strong demand for improvement in processability in micromolding of optical components using a crosslinkable polymer. For example, for optical waveguides, there exists a need for reduction in the number of steps during production and improvement in micromolding processability and productivity by expansion of the area of substrate. Optical waveguide parts have a structure in which light is enclosed three-dimensionally; the core region is normally embedded in the clad region; and methods of producing a channel-type optical waveguide are roughly grouped into the following five methods. In production methods by selective polymerization, direct exposure and stamper, a crosslinkable and curable monomer constituting the crosslinkable polymer or a monomer mixture (composition) thereof is used as a raw material, and crosslinking and curing (hereinafter, referred to as curing) is performed commonly by a light (UV ray) curing method in the presence of a photopolymerization initiator.

### <Selective polymerization method>

The core region is formed by impregnating a monomer in a film and curing the impregnated monomer through a photomask; the uncured monomer is removed by vaporization; and substrates are adhered to both faces of the film.

### <Photolithography and RIE method>

A core-region polymer is coated on the surface of a lower clad region formed on a substrate; a photoresist is coated thereon; and the photoresist layer is cured through a photomask. Then, a core region is formed by RIE processing, and a higher clad region is then formed.

### <Direct exposure method>

A monomer is coated on the surface of a lower clad region formed on a substrate, and a core region is formed by curing through a photomask. After removal of the uncured monomer, a higher clad region is formed.

### <Photobleaching method>

A resin film containing a particular compound such as colorant is placed on the surface of a lower clad region formed on a substrate; a core region is formed by photoirradiation through a photomask, changing the refractive index only in the photoirradiated region; and a higher clad region is then formed thereon.

### <Stamper method>

A monomer layer coated on a substrate is cured, as it is pressed by a stamper (mold); and, after separation of the stamper, a lower clad region having concave core portions is formed on the surface. Then, a monomer is poured into the concave core portions and cured, and then a higher clad region is formed.

Although there are advantages and disadvantages for each of the 5 kinds of production methods, the stamper method, in which there is no need for a photomask, there is no need for removal of monomer, it is possible to form precisely a fine-shaped core region, there is a smaller number of production steps, it is possible to increase the area of substrate, and it is easier to mount the optical fiber, is considered to be most promising. However, optical waveguides have a complicated structure including basic structures , such as bending, branching, merging, intersection and combination thereof, and thus, the current most important issue for the stamper method is further improvement in the definition of the fine shape of the core region.

The principal reason for the light loss by crosslinkable polymers for use in optical components is due to the chemical structure of polymer. Among the chemical structures, the C-H bonds and benzene rings present in the polymer increase the light loss. The reason is also common to straight-chain polymers.

The light loss by C-H bonds is mainly due to stretching vibration. On the other hand, as for benzene ring, the light loss by Reyleigh scattering is added to the light loss by stretching vibration by C-H bonds and π-electron-transition absorption, and thus, the light loss is larger.

It has been well known that reduction in the number of C-H bonds or elimination of C-H bond or benzene ring is effective for reducing the light loss due to the polymer chemical structure. Substitution of C-H bonds with C-D (deuterium) bonds is effective for reducing the light loss by polymers, but raises a new problem of increase in the hygroscopicity of the polymers. Substitution of C-H bonds with C-X (X represents fluorine, chlorine, bromine, or iodine) bonds reduces the light loss by polymers drastically. However, use of chlorine, bromine or iodine as X raises problems that the C-X bond is unstable chemically and thermally and thus easily cleaved or decomposed and that the polymer has a very high refractive index. Because C-F (fluorine) bond is more stable and makes the polymer have a lower refractive index, various kinds of polymers having C-F bonds instead of C-H bonds are developed and part of them are in practical use, as the best method for reducing the light loss by polymers.

Straight-chain aliphatic polymers in which most or all of the C-H bonds are substituted with C-F bonds are lower in light loss by an amount proportional with the degree of substitution, but the heat resistance thereof is still insufficient (for example, Nonpatent Literature 1). It is also impossible to give crosslinkable aliphatic polymers solder heat resistance (for example, Patent Document 1). Perfluorobenzene ring-containing aromatic polymers wherein all C-H bonds are substituted with C-F bonds have a reduced light loss, but the light loss due to π-electron-transition absorption by the perfluorobenzene ring and Reyleigh scattering still remains. Perfluorocyclic ether polymers in which all C-H bonds are substituted with C-F bonds have a significantly reduced light loss, but still have a problem that the heat resistance is insufficient, because they are straight-chain polymers (for example, Nonpatent Literature 2).

On the other hand, in production of optical waveguides of a crosslinkable polymer that gives heat resistance, the stamper method favorable in processability is considered to be most promising, as described above. In the stamper method, an essential requirement in the production process is that fine shapes are formed accurately after a crosslinkable monomer or a monomer composition (hereinafter, referred to as a crosslinkable resin or resin composition) is cured, as it is pressed by a stamper (mold) carrying very fine shapes of several µm in size, and the stamper is then separated. For that reason, the releasability of the stamper from the crosslinked polymer obtained by curing (hereinafter, referred to as cured resin product) and the fine configuration-shaping property, accuracy of the fine shapes, become the most important requirements in properties in the production process. Insufficient releasability raises a problem of prohibiting accurate transfer of the fine shapes of the stamper and also repeated use of the stamper. On the other hand, insufficient fine configuration-shaping property causes a problem in forming shapes as designed and also in decrease in yield. There is an urgent need for improvement of the conventional cured resin, which is insufficient in releasability and fine configuration-shaping property as described above.
Nonpatent Literature 1: "Fluorocarbon Resin Handbook", Nikkankogyo Shimbun, Ltd, Nov. 30, 1990, p. 733
Patent Document 1: Japanese Patent Laid-Open No. 2002-332313
Nonpatent Literature 2: "Control of the Refractive Index of Transparent Polymers", Center for Academic Publications Japan, Nov. 10, 1998, p. 206

### Disclosure of Invention

### Technical Problems to be Solved

Among plastic optical components, particularly for optical waveguide-like parts formed with a cured resin product for use in optical fiber communication devices, physical properties such as low light loss, controllability in refractive index, and solder heat resistance are important required-properties in addition to the common required-properties for optical components including lenses such as optical properties, mechanical properties, moisture resistance, light stability, and durability,; and thus, there has been an urgent need in the industry for development of a cured resin product satisfying these requirements in physical properties.

Although the stamper method is considered to be most promising as a method of producing optical waveguides from a curable resin composition from the viewpoint of processability, improvement is also needed in the requirements in processing such as the stamper releasability from cured resin product and the fine configuration-shaping property of cured resin product.

However, currently, there is no cured resin product available that satisfies both the requirements in physical properties and the requirements in processing.

An object of the present invention is to provide an optical component composed of a cured resin product satisfying the requirements in the physical properties and the requirements in processing at the same time, and in particular, an optical component composed of a cured resin product superior in low-light loss characteristics, controllability in refractive index, solder heat resistance, stamper releasability and fine configuration-shaping property.

### Means to Solve the Problems

After intensive studies on cured resin products containing various chemical structure having C-F bonds, the inventors have found that a perfluorocyclohexane ring-containing cured-resin-product obtained by radical polymerization satisfies the requirements in physical properties and the requirements in processing, and completed the present invention.

The present invention relates to an optical component composed of a cured-resin-product containing perfluorocyclohexane rings prepared by radical polymerization.

### Effects of the invention

The cured-resin-product constituting the optical component according to the present invention is superior in optical properties such as transparency and low refractive index, mechanical properties such as strength and modulus of elasticity, moisture resistance, and light stability, has a small light loss, allows control of refractive index in a narrow range, has favorable solder heat resistance, and is also superior in stamper releasability and fine configuration-shaping property. Accordingly, the cured-resin-product according to the present invention is favorable for plastic optical components and most favorable, in particular, for production of optical components having a fine shape.

### Best Mode for Carrying out the Invention

The optical component according to the present invention comprises a cured-resin-product having a perfluorocyclohexane ring as an essential component. The "cured-resin-product" in the present specification means a crosslinked and cured-resin-product having a three-dimensional network structure by radial polymerization.

The perfluorocyclohexane ring contained in the cured-resin-product has a chemical structure of cyclohexane wherein all C-H bonds are substituted with C-F bonds. The perfluorocyclohexane rings according to the present invention include perfluorocyclohexane rings in which the C-F bonds are partially substituted with -CF₃.

The method of producing the cured resin product containing the perfluorocyclohexane ring-is not particularly limited, if it is possible to introduce the perfluorocyclohexane ring into the cured-resin-product, and examples thereof include the following three basic methods: a first method of preparing a cured-resin-product by curing a crosslinkable resin or resin composition containing a perfluorocyclohexane ring-containing monomer; a second method of preparing a cured-resin-product by curing a crosslinkable resin composition of a perfluorocyclohexane ring-containing polymer, a copolymer thereof, or a mixture thereof dissolved in a bivalent or higher fluorine-containing monomer; and a third method of preparing a cured-resin-product by curing a crosslinkable resin composition of a fluorine-containing polymer containing no perfluorocyclohexane ring, a copolymer thereof, or a mixture thereof dissolved in a bivalent or higher monomer having a perfluorocyclohexane ring.

In the first method, the perfluorocyclohexane ring-containing monomer is a monomer represented by a chemical structure in which a radical polymerization group is bound directly or indirectly to a perfluorocyclohexane ring via a connecting group. The radical polymerization group is not particularly limited so long as it has a radically-polymerizable unsaturated bond at the terminal, and favorable examples thereof include radically reactive (meth) acryloyloxy groups (both acryloyloxy and methacryloyloxy groups, the same will apply hereinafter) and vinyl groups; and particularly a (meth)acryloyloxy group is preferable. The perfluorocyclohexane ring-containing monomers include monosubstituted monomers, disubstituted monomers and trisubstituted monomers, depending on the number of the radical polymerization groups, which respectively correspond to monovalent monomers, bivalent monomers and trivalent monomers. That is, an n-valent monomer contains n radical polymerization groups. A disubstituted monomer has radical polymerization groups at the o-, m- or p- positions, and a trisubstituted monomer, at the 1,2,3-, 1,2,4-, 1,3,5-, and other positions. The group connecting the perfluorocyclohexane ring with the radical polymerization group in the perfluorocyclohexane ring-containing monomer is preferably an alkylene group represented by - (CH₂)ₙ- (wherein, n is 0, 1 or 2, preferably 0 or 1). When n is 0, a radical polymerization group is bound to the perfluorocyclohexane ring directly in the monomer.

Typical examples of the monovalent perfluorocyclohexane ring-containing monomers include (meth)acryloyloxyperfluorocyclohexane, (meth)acryloyloxymethylperfluorocyclohexane, (meth)acryloyloxyethylperfluorocyclohexane, vinylperfluorocyclohexane, and the like.
Typical examples of the bivalent perfluorocyclohexane ring-containing monomers include o-, m- and p-di(meth)acryloyloxyperfluorocyclohexanes, o-, m- and p-bis((meth)acryloyloxymethyl)perfluorocyclohexanes, o-, m-and p-bis((meth)acryloyloxyethyl)perfluorocyclohexanes, and p-divinylperfluorocyclohexane, and the like.
Typical examples of the trivalent perfluorocyclohexane ring-containing monomers include 1,3,5-tri(meth)acryloyloxyperfluorocyclohexane, 1,3,5-tris((meta) acryloyloxymethyl)perfluorocyclohexane, and 1,3,5-tris((meta) acryloyloxyethyl)perfluorocyclohexane, and the like.

Such a perfluorocyclohexane ring-containing monomer can be prepared according to common methods known in the art. For example, (meth)acryloyloxymethylperfluorocyclohexane can be prepared in an esterification reaction in solvent between hydroxymethylperfluorocyclohexane and (meth)acrylic acid or (meth)acryl chloride.

In the first method, at least one of the monovalent or higher monomers containing a perfluorocyclohexane ring is used. Because the cured-resin-product according to the present invention is a crosslinked cured-resin-product, in the first method, (i) one or more bivalent or higher perfluorocyclohexane ring-containing monomers are selected and used, or (ii) if the bivalent or higher monomer is not used, one or more monovalent perfluorocyclohexane ring-containing monomers and one or more bivalent or higher fluorine-containing monomers containing no perfluorocyclohexane ring are used in combination.

In the case of (i), one or more of the bivalent or higher perfluorocyclohexane ring-containing monomers and one or more of the monovalent perfluorocyclohexane ring-containing monomers may be used in combination. If used in combination, the blending ratio of the monovalent monomers is preferably 50% by weight or less with respect to the total amount of monomers. A ratio of more than 50% by weight leads to increase in deterioration of solder heat resistance of the cured-resin-product, stamper releasability, and fine configuration-shaping property.

Alternatively in the case of (i), one or more of the bivalent or higher perfluorocyclohexane ring-containing monomers and one or more of the fluorine-containing monomers containing no perfluorocyclohexane ring (hereinafter, referred to as other fluorine-containing monomers) may be used in combination. An example of other fluorine-containing monomer is a monomer containing a perfluoroalkyl or perfluoroalkylene group, a radical polymerization group, and the connecting group described above between the perfluoroalkyl or perfluoroalkylene group and the radical polymerization group. The other fluorine-containing monomers also include monovalent, bivalent, and higher monomers, depending on the number of radical polymerization groups. The radical polymerization group contained in the other fluorine-containing monomer is preferably a (meth)acryloyloxy or vinyl group, particularly preferably a (meth)acryloyloxy group, to make the monomer has the polymerizability equivalent to that of the perfluorocyclohexane ring-containing monomer. For prevention of deterioration in the heat resistance of the cured-resin-product, use of a monomer having a long-chain perfluoroalkyl or perfluoroalkylene group is undesirable. The number of carbons in the perfluoroalkyl or perfluoroalkylene group is preferably in the range of 3 to 8.

Typical examples of the monovalent other fluorine-containing monomers include perfluoroethylmethyl (meth)acrylate, perfluoropropylmethyl (meth)acrylate, perfluorobutylmethyl (meth)acrylate, perfluoropentylethyl (meth)acrylate, perfluorohexylethyl (meth)acrylate, perfluorooctylethyl (meth)acrylate, and the like.
Typical examples of the bivalent or higher other fluorine-containing monomers include 1,3-bis((meth)acryloyloxymethyl)perfluoropropane, 1,4-bis((meth)acryloyloxymethyl)perfluorobutane, 1,4-bis((meth)acryloyloxyethyl)perfluorobutane, 1,6-bis((meth)acryloyloxymethyl)perfluorohexane, 1,8-bis((meth)acryloyloxymethyl)perfluorooctane, and the like.

The blending ratio of the other fluorine-containing monomers is preferably 40% by weight or less with respect to the total amount of monomers when the monomers are monovalent, and 50% by weight or less when the monomers are bivalent or higher. A ratio higher than these blending ratios is undesirable, because of deterioration in solder heat resistance of cured-resin-product, stamper releasability, and fine configuration-shaping property.

In the case of (ii), one or more of the bivalent or higher monomers usable as the other fluorine-containing monomers in the case of (i) may be used as the bivalent or higher other fluorine-containing monomers. In such a case, the blending ratio of the monovalent perfluorocyclohexane ring-containing monomers is in the range of 60 to 40% by weight with respect to the total amount of monomers. A blending ratio of more than 60% by weight leads to insufficient solder heat resistance, while a ratio of less than 40% by weight to insufficient stamper releasability and fine configuration-shaping property.

The second method of introducing perfluorocyclohexane rings in the cured-resin-product according to the present invention is a method of preparing a cured-resin-product by curing a resin composition containing a perfluorocyclohexane ring-containing polymer, a copolymer thereof, or a mixture thereof dissolved in one or more monomers selected from bivalent or higher fluorine-containing monomers.

The perfluorocyclohexane ring-containing polymer is a homopolymer of one of the monovalent perfluorocyclohexane ring-containing monomers in the first method described above.

The perfluorocyclohexane ring-containing copolymer is a copolymer of two or more of the monovalent perfluorocyclohexane ring-containing monomers in the first method described above. Copolymerization of a bivalent or higher monomer containing a perfluorocyclohexane ring with a monovalent monomer is undesirable, because it gives a crosslinkable polymer less soluble in a bivalent or higher fluorine-containing monomer.

The perfluorocyclohexane ring-containing copolymers include copolymers of one or more of the monovalent perfluorocyclohexane ring-containing monomers in the first method described above and one or more of the monovalent other fluorine-containing monomers. In such a case, a monovalent other fluorine-containing monomer in the first method described above may be used as the monovalent other fluorine-containing monomer. A monomer having a carbon number of 9 or more is undesirable, because of greater deterioration in solder heat resistance of cured-resin-product, stamper releasability, and fine configuration-shaping property.

The weight ratio of the monovalent other fluorine-containing monomers in the copolymer in the second method described above may vary according to the number of carbons in the perfluoroalkyl group, but is normally 50% by weight or less by weight. A weight ratio of more than 50% by weight is undesirable, because of deterioration in solder heat resistance of cured-resin-product, stamper releasability, and fine configuration-shaping property.

The polymer or copolymer containing perfluorocyclohexane rings can be prepared by known methods such as thermal and photochemical polymerization methods. The molecular weight of the polymer or copolymer is preferably in the range of 5,000 to 50,000 and more preferably in the range of 10,000 to 40,000. A molecular weight of less than 5,000 is undesirable because the stamper releasability and the fine configuration-shaping property of cured-resin-product are insufficient, while a molecular weight of more than 50,000 is also undesirable because it causes a problem in solubility in or compatibility with a bivalent or higher fluorine-containing monomer. The weight ratio of the perfluorocyclohexane ring-containing polymer or copolymer, or the mixture thereof, in the cured-resin-product prepared by the second method is preferably in the range of 40 to 60% by weight. A weight ratio outside the range is unfavorable, because solder heat resistance, stamper releasability, and fine configuration-shaping property of cured-resin-product are insufficient.

The bivalent or higher fluorine-containing monomer for use in dissolving the perfluorocyclohexane ring-containing polymer or copolymer is most preferably a bivalent or higher perfluorocyclohexane ring-containing monomer used in the first method described above; but one or more of the bivalent or higher monomers usable as the other fluorine-containing monomer in the first method, i.e., bivalent or higher monomers containing a perfluoroalkylene group having 3 to 8 carbon atoms, may be used. Use of a monomer having a perfluoroalkylene group having 9 or more carbon atoms is undesirable, because of problems in solder heat resistance and stamper releasability of cured-resin-product. In addition, one or more of the bivalent or higher perfluorocyclohexane ring-containing monomers used in the first method described above and one or more of the bivalent or higher monomers usable as the other fluorine-containing monomers in the first method may be used in combination. In such a case, the blending ratio of these monomers is arbitrary. Further, the bivalent or higher fluorine-containing monomer and monovalent perfluorocyclohexane ring-containing monomer may be used in combination in any range, if the object of the present invention is achievable.

The third method of introducing perfluorocyclohexane rings into the cured-resin-product according to the present invention is a method of preparing a cured-resin-product by curing a resin composition of a fluorine-containing polymer containing no perfluorocyclohexane ring, a copolymer thereof, or a mixture thereof dissolved in one or more monomers selected from the bivalent or higher perfluorocyclohexane ring-containing monomers.

In the third method, the fluorine-containing polymer containing no perfluorocyclohexane ring is a homopolymer of a monovalent other fluorine-containing monomer. Examples of the monovalent other fluorine-containing monomers are the same as those of the monovalent other fluorine-containing monomer in the second method. A carbon number of 9 or more is undesirable, because of deterioration in the solder heat resistance of cured-resin-product, stamper releasability, and fine configuration-shaping property.
The fluorine-containing copolymer containing no perfluorocyclohexane ring is a copolymer of two or more of the monovalent other fluorine-containing monomers.

The fluorine-containing polymer or copolymer containing no perfluorocyclohexane ring can be prepared by known methods such as thermal and photochemical polymerization methods in solvent. The molecular weight of the polymer or copolymer is preferably in the range of 5,000 to 50,000, more preferably in the range of 10,000 to 40,000. A molecular weight of less than 5,000 is unfavorable because of insufficient stamper releasability and fine configuration-shaping property of cured-resin-product, while a molecular weight of more than 50,000 is also unfavorable because of a problem of solubility in and compatibility with the bivalent or higher perfluorocyclohexane ring-containing monomer. The weight ratio of a fluorine-containing polymer containing no perfluorocyclohexane ring, a copolymer thereof, or a mixture thereof in the cured-resin-product of the third method is preferably 60% by weight or less, more preferably 50% by weight or less. A weight ratio of more than 60% by weight is unfavorable, because the solder heat resistance, stamper releasability, and fine configuration-shaping property of cured-resin-product are insufficient.

The bivalent or higher perfluorocyclohexane ring-containing monomer may be used in combination with the monovalent perfluorocyclohexane ring-containing monomer used in the first method and/or the other fluorine-containing monomer used in the first method, in the range that does not impair the advantageous effects of the present invention.

A polymerization initiator is added to the crosslinkable resin composition used in the first to third methods as a component needed for curing. A photopolymerization initiator is added when a photo-curing method (hereinafter, referred to as UV curing) is adopted, while a thermal polymerization initiator is added when a heat curing method is adopted. Both polymerization initiators are added when these curing methods are used in combination.

Any one of common photopolymerization initiators used for UV curing may be used as the photopolymerization initiator. The photopolymerization initiators include α-cleavage, hydrogen-abstraction, electron-transfer, and other initiators. Typical examples thereof include acetophenones, benzophenones, benzyls, benzoin ethers, benzyl diketals, benzoyl benzoates, thioxanthones, acylphosphine oxides, acylphosphinic esters, and the like. Use of a hydroxyl group-containing photopolymerization initiator or a photopolymerization initiator abstracting hydrogen and forming a hydroxyl group is undesirable, because the resulting cured-resin-product causes increase in light loss when used for production of optical components such as optical waveguides. In addition, the photopolymerization initiator for use should also be selected, taking into consideration the solubility thereof in the crosslinkable resin composition according to the present invention. The amount of the photopolymerization initiator added is generally 1 to 5% by weight in the entire composition.

Any one of common thermal polymerization initiators used in heat curing resins may be used as the thermal polymerization initiator. Examples of the thermal polymerization initiators include organic peroxides such as alkyl or allyl hydroperoxides, dialkyl or diallyl peroxides, peroxy esters, diacyl peroxides, ketone peroxides, azo compounds, and the like. However, use of an organic peroxide that decomposes at medium to high temperature is preferable, from the points of stability, handling efficiency, and others. Typical examples of the compounds include t-butyl hydroperoxide, cumene hydroperoxide, di-t-butyl peroxide, dicumyl peroxide, t-butylcumyl peroxide, t-butyl peroxybenzoate, di-t-butyl peroxyphthalate, acetyl peroxide, benzoyl peroxide, methyl-i-butylketone peroxide, and the like. Use of a hydroperoxy group-containing organic peroxide that generates hydroxy-radicals is undesirable because of increase of light loss when used for production of optical components such as optical waveguides. In addition, the thermal polymerization initiator for use should also be selected, taking into consideration the solubility thereof in the crosslinkable resin composition according to the present invention. The amount of thermal polymerization initiator added is generally 1 to 5% by weight in the entire composition.

An other non-fluorine-containing monomer such as an aliphatic, alicyclic, aromatic, or other monomer, and a silane-based, titanium-based, or other coupling agent, and the like may be added as needed to the crosslinkable resin composition used in the present invention, for specific purposes, for example, for viscosity adjustment and improvement in compatibility and adhesiveness to substrate; but the addition amount should be kept in the range that allows achievement of the object of the present invention, specifically at several % by weight or less in the entire composition. These monomers and coupling agents should not contain a hydroxyl, amino, carboxyl, mercapto, or other group that increases light loss significantly.

The cured-resin-product obtained by curing the crosslinkable resin composition for use in the present invention by the UV-curing or/and heat curing methods satisfies the requirements for plastic optical components such as in optical and mechanical properties, moisture resistance, light stability, and durability, as well as the severe requirements in physical properties for optical components for use in optical fiber communication devices such as in low light loss, controllability in refractive index, and solder heat resistance. In addition, the requirements in processing for optical components that demands fine high-precision processability and easier processability, for example, the requirements in processing for optical waveguides that demands very favorable stamper releasability and fine configuration-shaping property are also satisfied.

Hereinafter, the process for producing an optical waveguide, which is the most favorable application of the cured-resin-product according to the present invention among many optical components for optical fiber communication devices, will be described; and the cured-resin-product according to the present invention is most useful in processing by the stamper method which is regarded as most promising. It is because it is possible by the present invention to solve the problems associated with the stamper method in satisfying the requirements in processing such as stamper releasability and fine configuration-shaping property. In preparation of optical waveguides by the stamper method, both UV curing and heat curing may be used for curing, but use of UV curing is preferable from the points of advantages in curing speed and processability.

In preparation of optical waveguides by UV curing, a crosslinkable resin composition is applied on a substrate; the thin film is pressed with a stamper and irradiated with ultraviolet light, giving a lower clad region of the cured-resin-product. Subsequent removal of the stamper leaves concave core portions corresponding to the shapes of the stamper formed on the lower clad region surface. A crosslinkable composition having a refractive index, as determined after curing, slightly larger than that of the cured-resin-product constituting the lower clad region is poured into the concave core portions, and then, irradiated with ultraviolet light, forming a cured-resin-product core region. Then, the same crosslinkable resin composition as that for the lower clad region is applied on the surface of the lower clad region and the core region, and is UV cured, forming a higher clad region made of cured-resin-product.

The method of preparing optical waveguides by UV curing using a stamper, which has a smaller number of processing steps, does not use a photomask, and a step of removing the uncured crosslinkable resin composition is not necessary. It is possible to adjust the slight difference in refractive index between the cured-resin-products in the core and clad regions and to control the refractive indexes in a narrow width easily by slightly modifying the blending ratio of monomers constituting the curing resins. In addition, the cured-resin-products in the core and clad regions are very similar in composition with only a slight difference in blending ratio, and thus, adhesion at the interface is favorable. Of course, adhesion at the interface between the lower and higher clad regions is also favorable.

Among the processing steps for production of optical waveguides by UV curing using a stamper, the step of forming a core and lower clad regions simultaneously by UV-curing a thin film of crosslinkable resin composition applied on a substrate as it is pressed by a stamper is definitely most important. In other words, releasability of the stamper having a fine shape that is pressed onto the surface of the lower clad region of cured-resin-product and definition of the patterned fine shapes after separation are the most important requirements in processing.

Cured-resin-products from a perfluoroaliphatic monomer showing low light loss generally have favorable stamper releasability after UV curing, but also have a shortcoming that the fine shape of the patterned concave portions formed after separation varies and the fine shapes of stamper is not reproduced as designed. The cured perfluorocyclohexane ring-containing resin according to the present invention has favorable stamper releasability, and also allows reproduction of the fine shapes of the stamper as designed, because there is no change in the fine shape of the concave portions patterned on the lower clad surface. Further studies on the reasons for the favorable definition of fine shape revealed that it is related to one mechanical property of the cured-resin-product, Young's modulus. The cured perfluorocyclohexane ring-containing resin according to the present invention was found unexpectedly to have a Young's modulus significantly larger than that of the cured-resin-products of a perfluoroaliphatic monomer. When the fine configuration-shaping property of cured-resin-product is expressed with Young's modulus, it is preferably 2,500 MPa or more, more preferably 3,000 MPa or more.

The monomeric polymerization group in the crosslinkable resin composition for use in production of optical waveguides by UV curing using a stamper is preferably a (meth)acryloyloxy group, because of superiortiy in UV curing efficiency, adhesiveness, monomer compatibility, and others. The UV curing demands a UV source, and a high-pressure mercury lamp, metal halide light, or the like is used normally. The UV irradiation quantity needed for forming the cured-resin-product according to the present invention depends on the kinds of the monomer and photopolymerization initiator used, the thickness of the coated film, and others, and thus, is arbitrary, but normally in the range of 1,000 to 5,000 mJ/ cm².

The cured-resin-product according to the present invention can be formed also by heat curing. Different from the UV curing, heat curing demands heating of the crosslinkable resin composition. For example, when an optical waveguide is prepared by stampering, the resin composition is heated as pressed with a stamper, instead of UV irradiated. The temperature and the period of heating may vary, but is normally in the range of 60°C for 60 minutes to 150°C for 10 minutes. The stamper releasability and the fine configuration-shaping property of the cured-resin-product obtained by heat curing are favorable, similarly to those of the cured-resin-products obtained by UV curing.

The cured-resin-product according to the present invention may also be prepared by a curing method in combination of UV curing and heat curing. Normally in such a case, the crosslinkable resin composition is first cured to a suitable degree by UV irradiation and then completely by heat curing. The stamper releasability and the fine configuration-shaping property of the cured-resin-product obtained are favorable, similarly to the cured-resin-products prepared by single curing.

The cured-resin-product according to the present invention, which satisfies the severe requirements in physical properties (e.g., low light loss, controllability in refractive index, solder heat resistance) and in processing properties (e.g., stamper releasability and fine configuration-shaping property), is most suitable for optical components for use in optical fiber communication devices, for example, micro optical components including lens and prism; optical fiber parts; and optical waveguide-like parts such as optical branching/coupling waveguide, beam splitter/coupler waveguide, photocoupling waveguide, optical switch, photoisolator, photo-attenuation/amplification parts, photointerconnection and light guide circuits.

The cured-resin-product according to the present invention, which is superior in transparency, heat resistance, moisture resistance, light stability, and others, can also be used as various plastic lenses installed in various optical devices. The cured-resin-product according to the present invention, which has very favorable stamper releasability and fine configuration-shaping property, can be used as fine-shaped microlens array, photoreflection sheet, and the like. In addition, the cured-resin-product according to the present invention, which has a low refractive index and is superior heat resistance, can also be used as the clad material for optical fiber.

### EXAMPLES

Hereinafter, the present invention will be described more specifically with reference to the following Examples, but it should be understood that the present invention is not restricted by the Examples.
The tests described in Examples or Comparative Examples were performed according to the following methods.

### Stamper releasability and fine configuration-shaping property

A crosslinkable resin composition was applied on a glass plate (50 mm x50 mm, thickness: 0.5 mm); a mold (stamper) with five convex portions each of which has 10 mm x5 µm x height 5 µm aligned at an interval of 5 mm was pressed on the film so that the applied layer thickness was approximately 25 µm. Under such conditions, light from a high-pressure mercury lamp was irradiated from the glass plate side at an intensity of 3,000 mJ/cm², to give a UV-cured-resin-product thin film. Then, the stamper was separated, and the degree of releasability was determined from easiness in separating the stamper. The fine shape of concave portions formed on the cured-resin-product thin film surface of the test piece thus obtained was examined with FE-SEM electron micrograph, and the fine configuration-shaping properties were determined.

### Young's modulus

A crosslinkable resin composition was poured into the mold for preparation of 5B test piece specified by JIS K7162 and covered with a quartz glass; and light from a high-pressure mercury lamp was irradiated thereon at 3,000 mJ/cm², to give a UV-cured dumbbell-shaped test piece for measurement of tensile properties. The Young's modulus thereof was determined according to the test method of JIS K7161, by using a tensile tester (Shimadzu Autograph, type AGS-20kNG, manufactured by Shimadzu Corporation) at a test speed of 1 mm/minute.

### Solder heat resistance

The test piece having concave portions formed on cured-resin-product film prepared for the tests of the stamper releasability and the fine configuration-shaping property was placed in a circulation oven at 250°C for 20 seconds and then removed; and then, deformation of the fine configuration was analyzed with FE-SEM electron micrograph.

### Example 1

6.0 g of 1,2-bis (acryloyloxymethyl) perfluorocyclohexane (manufactured by Kyoeisha Chemical Co., Ltd.), 4.0 g of methacryloyloxymethylperfluorocyclohexane (manufactured by AZmax Co., Ltd.) and 0.3 g of a photopolymerization initiator IRUGACURE 907 (manufactured by Ciba Specialty Chemicals, Inc) were mixed and dissolved, to give a crosslinkable resin composition (I). According to the test method for the stamper releasability and the fine configuration-shaping property, the releasability and the fine configuration-shaping property of the cured-resin-product of the crosslinkable resin composition (I) were determined and found to be very favorable, and the stamper shape was reproduced at high definition. The solder heat resistance of the patterned test piece, as determined by the test method described above, was also favorable, and there was no change in the fine configuration. The Young's modulus of the dumbbell-shaped test piece separately formed from the crosslinkable resin composition (I), as determined according to the test method above, was 3,600 MPa, being very high.

### Example 2

7.5 g of 1,2-bis(acryloyloxymethyl)perfluorocyclohexane (described above), 2.5 g of 1,4-bis(methacryloyloxymethyl)perfluorobutane (manufactured by AZmax Co., Ltd.) and 0.3 g of IRUGACURE 907 (described above) were mixed and dissolved, to give a crosslinkable resin composition (II).
The releasability and the fine configuration-shaping property of the cured-resin-product of the crosslinkable resin composition (II) were determined and found to be very favorable, and the stamper shape was reproduced at high definition. After test on the solder heat resistance of the patterned test piece, there was no change in configuration, indicating that the test piece had favorable solder heat resistance. The Young's modulus of the dumbbell-shaped test piece separately formed from the crosslinkable resin composition (II) was 3,200 MPa, being very high.

### Example 3

5.0 g of methacryloyloxymethylperfluorocyclohexane (described above), 5.0 g of 1,4-bis(methacryloyloxymethyl)perfluorobutane (described above) and 0.3 g of IRUGACURE 907 (described above) were mixed and dissolved, to give a crosslinkable resin composition (III).
The releasability and the fine configuration-shaping property of the cured-resin-product of the crosslinkable resin composition (III) were determined and found to be very favorable, and the stamper shape was reproduced at high definition. After test on the solder heat resistance of the patterned test piece, there was almost no change in configuration, indicating that the test piece had favorable solder heat resistance. The Young's modulus of the dumbbell-shaped test piece separately formed from the crosslinkable resin composition (III) was 2,600 MPa, being very high.

### Comparative Example 1

5.0 g of 1,4-bis(methacryloyloxymethyl)perfluorobutane (described above), 5.0 g of hexafluoroisopropyl methacrylate (manufactured by Tokyo Chemical Industry Co., Ltd.) and 0.3 g of IRUGACURE 907 (described above) were mixed and dissolved, to give a crosslinkable resin composition (1).
The releasability and the fine configuration-shaping property of the cured-resin-product of the crosslinkable resin composition (1) were determined; the releasability was normal, but the stamper shape was deformed and not in high definition. Solder heat resistance test of the test piece further deformed its configuration. The Young's modulus of the dumbbell-shaped test piece separately formed from the crosslinkable resin composition (1) was 600 MPa, being very low.

### Example 4

A polymer was prepared from methacryloyloxymethylperfluorocyclohexane (described above) by a known solution thermal polymerization method, by using perfluoro-1,3-dimethylcyclohexane (manufactured by AZmax Co., Ltd.) as a solvent and α,α'-azobis (isobutylonitrile) (manufactured by NACALAI TESQUE, Inc.) as a polymerization catalyst. The polymer solution was mixed with methanol, to give a polymer precipitate, which is then washed and dried to give a white powdery polymer (A). The number-average molecular weight of the polymer (A), as determined by gel permeation chromatography (GPC), was 14,000.
4.0 g of the polymer (A), 6.0 g of 1,3-bis(methacryloyloxymethyl)perfluorocyclohexane (manufactured by Kyoeisha Chemical Co.) and 0.4 g of a photopolymerization initiator Lucirin TPO-L (manufactured by BASF Japan, Ltd.) were mixed and dissolved, to give a crosslinkable resin composition (IV).
The releasability and the fine configuration-shaping property of the cured-resin-product of the crosslinkable resin composition (IV) were determined and found to be very favorable, and the stamper shape was reproduced at high definition. After test on the solder heat resistance of the patterned test piece, there was no change in configuration, indicating favorable solder heat resistance. The Young's modulus of the dumbbell-shaped test piece separately formed from the crosslinkable resin composition (IV) was 3,400 MPa, being very high.

### Example 5

3.5 g of the polymer (A) prepared in Example 4, 2.0 g of methacryloyloxymethylperfluorocyclohexane (described above), 4.5 g of 1,4-bis(methacryloyloxymethyl)perfluorobutane (described above) and 0.4 g of Lucirin TPO-L (described above) were mixed and dissolved, to give a crosslinkable resin composition (V).
The releasability and the fine configuration-shaping property of the cured-resin-product of the crosslinkable resin composition (V) were determined and found to be very favorable, and the stamper shape was reproduced at high definition. After test on the solder heat resistance of the patterned test piece, there was no change in configuration, indicating favorable solder heat resistance. The Young's modulus of the dumbbell-shaped test piece separately formed from the crosslinkable resin composition (V) was 3,000 MPa, being very high.

### Example 6

A copolymer was prepared from methacryloyloxymethylperfluorocyclohexane (described above) and perfluoro-n-propylmethyl methacrylate (manufactured by AZmax Co., Ltd.) in a similar manner to Example 4, and then, washed and dried, to give a white powdery copolymer (B). Analysis by the infrared absorption spectrum of the copolymer (B) indicated a copolymerization ratio of approximately 75:25 (% by weight). The number-average molecular weight of the copolymer (B), as determined by GPC, was 17,000.
4.5 g of the copolymer (B), 1.5 g of methacryloyloxymethylperfluorocyclohexane (described above), 4.0 g of 1,4-bis(methacryloyloxymethyl)perfluorobutane (described above) and 0.4 g of Lucirin TPO-L (described above) were mixed and dissolved, to give a crosslinkable resin composition (VI).
The releasability and the fine configuration-shaping property of the cured-resin-product of the crosslinkable resin composition (VI) were determined and found to be very favorable, and the stamper shape was reproduced at high definition. After test on the solder heat resistance of the patterned test piece, there was almost no change in configuration, indicating t favorable solder heat resistance. The Young's modulus of the dumbbell-shaped test piece separately formed from the crosslinkable resin composition (VI) was 2,800 MPa, being very high.

### Example 7

3.0 g of 2,2,2-trifluoroethyl acrylate polymer (C) (manufactured by Kyoeisha Chemical Co., number-average molecular weight: 12,000), 6.0 g of 1,3-bis(methacryloyloxymethyl)perfluorocyclohexane (described above), 1.0 g of methacryloyloxymethylperfluorocyclohexane (described above) and 0.4 g of Lucirin TPO-L (described above) were mixed and dissolved, to give a crosslinkable resin composition (VII).
The releasability and the fine configuration-shaping property of the cured-resin-product of the crosslinkable resin composition (VII) were determined and found to be very favorable, and the stamper shape was reproduced at high definition. After test on the solder heat resistance of the patterned test piece, there was no change in configuration, indicating that the test piece had favorable solder heat resistance. The Young's modulus of the dumbbell-shaped test piece separately formed from the crosslinkable resin composition (VII) was 2,900 MPa, being very high.

### Comparative Example 2

3.0 g of 2,2,2-trifluoroethyl acrylate polymer (C) (described above), 6.0 g of 1,4-bis(methacryloyloxymethyl) perfluorobutane (described above) and 0.4 g of Lucirin TPO-L (described above) were mixed and dissolved, to give a crosslinkable resin composition (2).
The releasability and the fine configuration-shaping property of the cured-resin-product of the crosslinkable resin composition (2) were determined, and the releasability was slightly unfavorable, and the stamper configuration was deformed not in high definition. Solder heat resistance test of the test piece further deformed its configuration. The Young's modulus of the dumbbell-shaped test piece separately formed from the crosslinkable resin composition (2) was 900 MPa, being very low.

### Example 8

7.0 g of 1,3-bis(methacryloyloxymethyl) perfluorocyclohexane (described above), 3.0 g of 1,4-bis(methacryloyloxymethyl) perfluorobutane (described above) and 0.3 g of di-t-butyl peroxide (manufactured by NACALAI TESQUE, Inc.) were mixed and dissolved, to give a crosslinkable resin composition (VIII).
In a similar manner to the test methods for stamper releasability and fine configuration-shaping property described above, the applied thin film of the crosslinkable resin composition (VIII) was heated, as pressed by the stamper, in a circulation oven at 110°C for 10 minutes, to give a cured-resin-product thin film. Stamper releasability from the cured-resin-product thin film was very favorable, and the stamper shape was reproduced in the cured-resin-product thin film at high definition. After test on the solder heat resistance of the test piece, there was no change in configuration, indicating favorable solder heat resistance. A dumbbell-shaped test piece was prepared with the crosslinkable resin composition (VIII) by using the mold for preparation of 5B test piece described above and by heating (at 110°C for 30 minutes, and then at 150°C for 5 minutes). The Young's modulus thereof determined was 3,100 MPa, being very high.

### Example 9

The crosslinkable resin composition (I) prepared in Example 1 was added dropwise on a glass plate framed with a spacer having a thickness of 50 µm, and a stamper (convex portion size: 10 mm×5 µm×5 µm) was pressed thereon to a thickness of 25 µm thickness. Under such conditions, light from a high-pressure mercury lamp was irradiated from the glass plate side at an intensity of 3,000 mJ/cm², to UV-cure the crosslinkable resin composition (I) and form a lower clad region. After separation of the stamper, a crosslinkable resin composition (IX) prepared by mixing and dissolving 5.5 g of 1,2-bis(acryloyloxymethyl)perfluorocyclohexane (described above), 4.5 g of methacryloyloxymethylperfluorocyclohexane (described above) and 0.3 g of IRUGACURE 907 (described above) was added full, dropwise in the concave portions formed on the lower clad region surface. Then, the crosslinkable resin composition (IX) in the concave portions was UV cured by irradiation from a high-pressure mercury lamp at 3,000 mJ/cm², to form a core region. The crosslinkable resin composition (I) was then added dropwise on the lower clad region surface with the core region formed thereon to the thickness of the spacer, covered with a glass plate, and exposed to UV light from a high-pressure mercury lamp at 3,000 mJ/cm², to form a higher clad region.
The optical waveguide test piece obtained was separated, and both ends thereof were cut with a dicing machine to expose the core regions, to give an optical waveguide. The light loss of the optical waveguide obtained, as determined by using a light loss analyzer (manufactured by Agilent Technologies, Inc), was 0.15 dB/cm in a wavelength band of 1.31 µm, being very low. The light loss of the optical waveguide after solder heat resistance test was also 0.15 dB/cm and not different from that before the test, indicating a favorable solder heat resistance as optical waveguide.

## Claims

1. An optical component composed of cured-resin-product, the cured resin product comprising a perfluorocyclohexane ring and being prepared by radical polymerization.

2. The optical component composed of cured-resin-product according to Claim 1, wherein one or more perfluorocyclohexane rings derived from monosubstituted, disubstituted, and trisubstituted monomer are included as the perfluorocyclohexane ring.

3. The optical component composed of cured-resin-product according to Claim 1 or 2, wherein the cured resin product is prepared from one or more monomers containing a perfluorocyclohexane ring and one or more radical polymerization groups.

4. The optical component composed of cured-resin-product according to Claim 3, wherein the cured-resin-product is prepared from one or more monomers containing a perfluorocyclohexane ring and two or more radical polymerization groups and one or more fluorine-containing monomers containing no perfluorocyclohexane ring; or prepared from one or more monomers containing a perfluorocyclohexane ring and a radical polymerization group and one or more fluorine-containing monomers containing no perfluorocyclohexane ring and containing two or more radical polymerization group.

5. The optical component composed of cured-resin-product according to Claim 1 or 2, wherein the cured-resin-product is prepared from a composition of one or more polymers or copolymers containing a perfluorocyclohexane ring, or the mixture thereof, dissolved in one or more monomers selected from fluorine-containing monomers containing two or more radical polymerization groups.

6. The optical component composed of cured-resin-product according to Claim 5, wherein one or more of the fluorine-containing monomers containing two or more radical polymerization groups contain a perfluorocyclohexane ring.

7. The optical component composed of cured-resin-product according to Claim 5 or 6, wherein the copolymer is a copolymer of one or more of monomers containing a perfluorocyclohexane ring and one radical polymerization group and one or more of fluorine-containing monomers containing no perfluorocyclohexane ring but containing one radical polymerization group.

8. The optical component composed of cured-resin-product according to any one of Claims 5 to 7, wherein the copolymer is a copolymer of one or more of monomers containing a perfluorocyclohexane ring and one radical polymerization group and one or more of fluorine-containing monomers containing no perfluorocyclohexane ring but containing one radical polymerization group; and the one or more of the monomers in the fluorine-containing monomers containing two or more radical polymerization groups are one or more of monomers containing a perfluorocyclohexane ring and two or more radical polymerization groups and/or fluorine-containing monomers containing no perfluorocyclohexane ring and containing two or more radical polymerization group.

9. The optical component composed of cured-resin-product according to Claim 1 or 2, wherein the cured-resin-product is prepared from a composition containing one or more fluorine-containing polymers containing no perfluorocyclohexane ring, copolymer thereof, or the mixture thereof, dissolved in one or more monomers containing a perfluorocyclohexane ring and two or more radical polymerization groups.

10. The optical component composed of cured-resin-product according to Claim 9, wherein one or more of the monomers containing a perfluorocyclohexane ring and two or more radical polymerization groups is used in combination with one or more of fluorine-containing monomers containing no perfluorocyclohexane ring.

11. The optical component composed of cured-resin-product according to any one of Claims 3 to 10, wherein the radical polymerization group is an acryloyloxy or methacryloyloxy group.

12. The optical component composed of cured-resin-product according to any one of Claims 3 to 10, wherein the monomer containing a perfluorocyclohexane ring and one or more radical polymerization groups contains an alkylene group represented by general formula: -(CH₂)ₙ- (n=0, 1 or 2), between the perfluorocyclohexane ring and the radical polymerization group.

13. The optical component composed of cured-resin-product according to any one of Claims 1 to 12, wherein the radical polymerization method is a photo-curing method and/or a heat curing method.

14. The optical component composed of cured-resin-product according to any one of Claims 1 to 13, wherein Young's modulus of the cured-resin-product is 2,500 MPa or more.

15. The optical component composed of cured-resin-product according to any one of Claims 1 to 14, wherein the optical component composed of a cured-resin-product is an optical waveguide-like part.

16. The optical waveguide-like part according to Claim 15 , wherein the optical waveguide-like part is prepared by a stamper method.
